# EUROPÄISCHE PATENTSCHRIFT

(11) **EP 2 925 581 B1**
(45) Veröffentlichungstag und Bekanntmachung des Hinweises auf die Patenterteilung: **06.02.2019**
(21) Anmeldenummer: 13798552.9
(22) Anmeldetag: 21.10.2013
(51) Int. Cl.: B60W 30/18, B60W 40/04, B60W 50/14, B60W 10/18, B60W 10/184

(54) **VERFAHREN ZUR UNTERSTÜTZUNG EINES EINE AMPEL DETEKTIERENDEN AMPELPHASENASSISTENTEN EINES FAHRZEUGS**
METHOD FOR ASSISTING A TRAFFIC LIGHT PHASE ASSISTANT OF A VEHICLE, WHICH DETECTS A TRAFFIC LIGHT
PROCÉDÉ DE MISE EN OEUVRE D'UN ASSISTANT "PHASE DE FEU DE SIGNALISATION" D'UN VÉHICULE DÉTECTANT LES PHASES D'UN FEU DE SIGNALISATION

(30) Priorität: 03.12.2012 DE 102012111740
(43) Veröffentlichungstag der Anmeldung: 07.10.2015
(73) Patentinhaber: Conti Temic Microelectronic GmbH, 90411 Nürnberg (DE); Continental Teves AG & Co. OHG, 60488 Frankfurt am Main (DE)
(72) Erfinder: LÜKE, Stefan, 61191 Rosbach vor der Höhe (DE); HEGEMANN, Stefan, 88239 Wangen (DE); KOMAR, Matthias, 60433 Frankfurt (DE)
(86) Internationale Anmeldenummer: PCT/DE2013/200241
(87) Internationale Veröffentlichungsnummer: WO 2014/086349

(56) Entgegenhaltungen:
- EP-A1- 2 472 229
- DE-A1- 10 040 123
- DE-A1-102009 040 252
- DE-A1-102010 063 006

## Beschreibung

Die Erfindung betrifft ein Verfahren zur Unterstützung eines mittels einer Kamera die Ampelphasen einer Ampel detektierenden Ampelphasenassistenten eines Fahrzeugs.

Aus der DE 10 2010 052 964 A1 ist eine Fahrerassistenzeinrichtung bekannt, die eine Kamera zur Erkennung der Rotphase einer Ampelanlage aufweist. Bei Erfassung eines solchen Objektes wird in Abhängigkeit der erkannten Ampelphasen das Fahrzeug rekuperierend abgebremst, bis es an einer Stopp-Linie vor der Ampel zum Stillstand kommt.

Dies setzt jedoch voraus, dass sich die Ampel ständig im Sichtbereich der Kamera befindet . Dies gilt auch insbesondere für solche Assistenzfunktionen, die aus dem Stillstand heraus wirken, wie bspw. das automatische Starten des Antriebsmotors des Fahrzeugs bei Wechsel der Rotphase auf die Grünphase der Ampel.

Dieses Problem wird bei einer Vorrichtung zur Fassung von Lichtsignalen von Verkehrsampeln für ein Fahrzeug gemäß der DE 10 2009 040 252 A1 dadurch gelöst, dass neben einer ersten im Bereich der Windschutzscheibe des Fahrzeugs angeordneten Kamera, welche bspw. Positionen von Fahrbahnmarkierungen, von anderen Verkehrsteilnehmern und/oder von Verkehrszeichen erfasst, jedoch aufgrund des nach oben eingeschränkten Sichtbereichs nicht Lichtzeichen von Verkehrsampeln, wenigstens eine zweite Kamera vorgesehen ist, deren Sichtbereich auf typische Positionen von Verkehrsampeln gerichtet ist. So schlägt auch die DE 100 40 123 A1 ein Fahrzeug vor, bei welchem zur Erfassung einer Verkehrsampel eine Kamera im Heckbereich des Fahrzeugs mit einem nach oben gerichteten Sichtfeld angeordnet ist.

Des Weiteren schlägt die DE 10 2010 063 006 A1, welche alle Merkmale des Oberbegriffs des Anspruchs 1 offenbart, ein Fahrerassistenzsystem eines Fahrzeugs mit einer Frontkamera vor, das automatisch ein zielgenaues Anhalten an einer durch die Frontkamera erkannten Haltelinie, bspw. einer Verkehrsampel ermöglicht.

Schließlich offenbart die EP 2 472 229 A1 ein Navigationssystem für ein Fahrzeug mit einer Kamera, bei welchem der durch die Kamera erkannte Abstand des Fahrzeugs zu einer Verkehrsampel derart korrigiert wird, dass das Auswandern der Verkehrsampel aus dem Sichtfeld verhindert wird.

Ausgehend von diesem Stand der Technik ist es Aufgabe der Erfindung, ein Verfahren zur Unterstützung eines mittels einer Kamera die Ampelphasen einer Ampel detektierenden Ampelphasenassistenten eines Fahrzeugs zu schaffen, so dass dessen Funktionsfähigkeit möglichst in allen Verkehrssituationen sichergestellt ist.

Diese Aufgabe wird gelöst durch ein Verfahren mit den Merkmalen des Patentanspruchs 1
Ein solches Verfahren zur Unterstützung eines mittels einer Kamera die Ampelphasen einer Ampel detektierenden Ampelphasenassistenten eines Fahrzeugs zeichnet sich erfindungsgemäß dadurch aus, dass
- bei Erkennung einer Ampel im Sichtfeld der Kamera mittels einer Steuereinheit die Länge des die Ampel im Sichtfeld der Kamera haltenden Fahrweges in Richtung der Ampel bestimmt wird, wobei der Fahrweg derart bestimmt wird, dass die Ampel noch im Sichtfeld der Kamera ist, wenn das Fahrzeug am Ende des Fahrweges stoppt, und
- ein die Länge des Fahrweges betreffendes Steuersignal ausgegeben wird.

Bevorzugt wird das die Länge des Fahrweges anzeigende Steuersignal an eine Anzeigevorrichtung des Fahrzeugs ausgegeben. Die Anzeigevorrichtung bewirkt eine das Ende des Fahrweges anzeigende optische und/oder akustische Anzeige, durch die der Fahrer informiert werden kann.

Damit wird dem Fahrer die Möglichkeit gegeben, sein Fahrzeug an einer angezeigten Haltelinie zu stoppen, um so die Funktionsfähigkeit des Ampelphasenassistenten sicherzustellen.

In einer vorteilhaften Ausgestaltung der Erfindung wird die optische und/oder akustische Anzeige als Entfernungsangabe in einer Maßeinheit für die Länge angezeigt. Alternativ oder zusätzlich kann die optische und/oder akustische Anzeige als optisches Piktogramm und/oder als akustisches Signal angezeigt werden.

Besonders vorteilhaft ist es gemäß einer weiteren Ausgestaltung der Erfindung, wenn das die Länge des Fahrweges anzeigende Steuersignal an ein in das Bremssystem des Fahrzeugs eingreifendes Assistenzsystem ausgegeben wird, und das Assistenzsystem ausgebildet ist, das Ende des Fahrweges als Zielbremsung zu übernehmen und den Fahrer hinsichtlich dieser Zielbremsung zu unterstützten.

In einer bevorzugten Ausführungsform wird das die Länge des Fahrweges betreffende Steuersignal an eine automatische Fahrzeugsteuerung ausgegeben. Die automatische Fahrzeugsteuerung kann insbesondere ein Full-Speed-ACC, ein Stop&Go-ACC, ein ACC (Adaptive Cruise Control bzw. Längsregeltempomat), ein Notbremsassistent oder eine vollständige automatische Fahrzeugquer- und Längsregelung sein. Diese steuert das Fahrzeug automatisch derart, dass das Fahrzeug am Ende des Fahrweges zum Stehen kommt. Das Ende des Fahrweges wird also insbesondere als Zielbremsung übernommen und das Fahrzeug automatisch auf diese Zielbremsung eingebremst.

Vorteilhaft kann der Fahrer über die automatische Fahrzeugsteuerung über eine optische und/oder akustische Anzeige informiert werden. Dann kann er die automatische Fahrzeugsteuerung besser nachvollziehen und wundert sich nicht, warum sein Fahrzeug möglicherweise eine Lücke zu einem vor ihm haltenden Fahrzeug lässt.

Um zu verhindern, dass das Ende des Fahrweges, also der Haltepunkt des Fahrzeugs zu weit vor der Ampel liegt, wird in einer weiteren Ausgestaltung der Erfindung vorgeschlagen, dass die Haltelinie der Ampel mittels der Kamera erfasst und die Länge des Fahrweges so bestimmt wird, dass dessen Ende eine vorgegebene Abstandsgrenze zur Haltelinie nicht überschreitet.

In einer weiteren Ausgestaltung der Erfindung werden zur Bestimmung der Länge des Fahrweges mittels einer 3D-Kamera die geometrische Position und der Abstand der Ampel von dem Fahrzeug bestimmt.

Alternativ ist es weiterbildungsgemäß vorgesehen, dass zur Bestimmung der Länge des Fahrweges der Abstand zur Ampel durch Auswertung der Bilddaten einer Monokamera mittels 3D-Szenenkonstruktion geschätzt wird. Ferner ist es möglich, dass zur Bestimmung der Länge des Fahrweges der Abstand zur Ampel durch Auswertung der Bilddaten einer Monokamera hinsichtlich der Winkeländerung der Ampel in den Bilddaten geschätzt wird.

Die Erfindung wird nachstehend anhand von Ausführungsbeispielen unter Bezugnahme auf die beigefügten Figuren ausführlich beschrieben. Es zeigen:
- Figur 1: eine schematische Darstellung einer Verkehrssituation mit einem ein Ampelphasenassistenzsystem aufweisenden Fahrzeug vor einer Ampel zur Erläuterung des erfindungsgemäßen Verfahrens, und
- Figur 2: ein schematisches Blockschaltbild eines Fahrzeugs mit einem Ampelphasenassistenten zur Durchführung des erfindungsgemäßen Verfahrens.

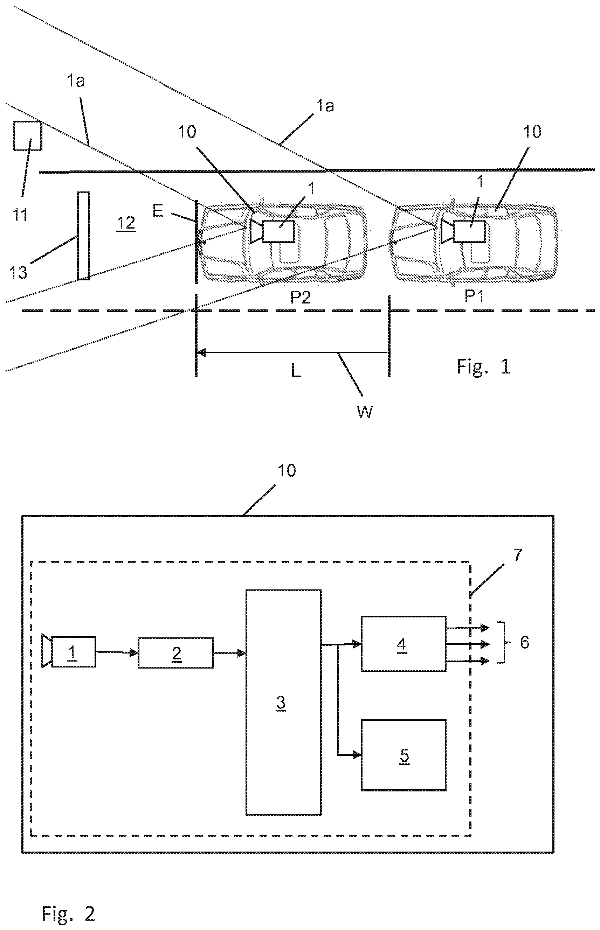

Figur 1 zeigt eine Situation vor einer Verkehrsampel 11 auf die sich ein auf einer Fahrspur 12 fahrendes Fahrzeug, bspw. ein Kraftfahrzeug 10 mit einem Ampelphasenassistenzsystem 7 zubewegt. Dieses Ampelphasenassistenzsystem 7 weist eine als Stereokamera oder Monokamera ausgeführte Kamera 1 mit einem Sichtbereich 1a auf, deren Bilddaten aus diesem Sichtbereich 1a gemäß Figur 2 einer Bildauswerteeinheit 2 zugeführt werden. Mittels einer Objekterkennungssoftware wird bspw. die Verkehrsampel 11 gemäß Figur 1 erkannt.

Gemäß Figur 1 bewegt sich das Fahrzeug 10 auf die Verkehrsampel 11 zu und befindet sich dabei zunächst in einer Position P1. In dieser Position P1 wird die Verkehrsampel 11 von der Kamera 11 erkannt und aus den Bilddaten die geografische Position der Verkehrsampel 11 sowie deren Abstand zum Fahrzeug 10 bestimmt oder geschätzt und diese Daten einer Steuereinheit 3 zugeführt (vgl. Figur 2). Bei Erkennen einer Rotphase muss das Fahrzeug 10 vor der Verkehrsampel 11 vor einer Haltelinie 13 anhalten. Daher wird aus diesen Daten von der Steuereinheit 3 ein Fahrweg W mit einer Länge L berechnet, so dass über diesen Fahrweg W bis zu dessen Ende E die Verkehrsampel 11 im Sichtbereich 1a der Kamera 1 bleibt. Die Steuereinheit 3 erzeugt ein diese Länge L des Fahrweges W anzeigendes Steuersignal, welches einer Anzeigevorrichtung 4 des Fahrzeugs 10 zugeführt wird.

Auf der Basis dieses Steuersignals wird von der Anzeigevorrichtung 4 eine optische und/oder akustische Anzeige erzeugt, die dem Fahrer das Ende E des Fahrweges W anzeigt, an welchem das Fahrzeug 10 angehalten werden soll, um dem Ampelphasenassistenten 7 des Fahrzeugs 10 die Funktionsfähigkeit zu erhalten, d. h. dass die Verkehrsampel 11 noch im Sichtbereich 1a der Kamera 11 ist, wenn das Fahrzeug 10 am Ende E des Fahrweges W, also in der Position P2 gemäß Figur 1 gestoppt wird. Aus der Position P2 des Fahrzeugs 10 kann das Ampelassistenzsystem 7 bei einem Phasenwechsel der Verkehrsampel 11 agieren und seine entsprechenden Funktionen ausführen.

Befolgt also der Fahrer des Fahrzeugs 10 diesen Hinweis, wird verhindert, dass das Fahrzeug zu nah an der Verkehrsampel 11 anhält und die Verkehrsampel 11 aus dem Sichtbereich 1a der Kamera 1 fällt.

Die Anzeige des Endes E des Fahrwegs W mittels der Anzeigevorrichtung 4 kann optisch durch die laufende Anzeige des aktuellen Abstandes bis zum Ende E des Fahrwegs W, also der Restweg bis zum Ende E als Entfernungsangabe in Meter erfolgen oder durch eine entsprechende Sprachausgabe.

Alternativ oder zusätzlich kann dem Fahrer auch mittels eines optischen Piktogramms und/oder akustischen Signals der Fahrweg W bzw. das Ende E dieses Fahrweges W unter Verwendung der Anzeigevorrichtung 4 dargestellt werden. Als optisches Piktogramm eignet sich bspw. die bildliche Darstellung einer dem Ende E des Fahrwegs W entsprechenden virtuellen Haltelinie auf einem Display der Anzeigevorrichtung 4. Ein Tonsignal mit fallender Tonhöhe kann bspw. als akustisches Signal verwendet werden.

Weist das Fahrzeug 10 zusätzlich ein in das Bremssystem eingreifendes Assistenzsystem auf, bspw. ein in Figur 2 mit dem Bezugszeichen 5 bezeichnetes ACC (Adaptive-Cruise-Control)-System (Abstandsregeltempomat), wird das die Länge L des Fahrweges W anzeigende Steuersignal auch diesem ACC-System 5 zugeführt.

Dieses ACC-System übernimmt das Ende E des Fahrweges W als Zielbremsung und unterstützt den Fahrer, um diese Zielbremsung einzuhalten. Hierzu ist das ACC-System 5 mit entsprechenden Aktoren 6, bspw. Bremsaktuatoren verbunden. Falls sich das ACC-System 5 bereits in einem Bremsmodus befindet, kann das Fahrzeug 10 automatisch mittels entsprechender Bremsaktuatoren 6 auf diese Zielbremsung abgebremst werden.

Um zu verhindern, dass das Ende E des Fahrweges W, also der der Position P2 entsprechende Haltepunkt des Fahrzeugs 10 zu weit vor der Verkehrsampel 11 liegt, wird die Haltelinie 13 der Verkehrsampel 11 mittels der Kamera 1 erfasst und die Länge L des Fahrweges W so bestimmt, dass dessen Ende eine vorgegebene Abstandsgrenze, also bspw. 5m zur Haltelinie 13 nicht überschreitet, um somit zu große Abstände der Position P2 des Fahrzeugs 10 zur Verkehrsampel 11 zu vermeiden.

Die Ermittlung der Position der Verkehrsampel 11 sowie deren Abstand zum Fahrzeug 10 kann in Abhängigkeit des verwendeten Kamerasystems für die Kamera 1 auf unterschiedliche Weise erfolgen.

So kann bei einer Verwendung einer Stereokamera als 3D-Kamera die Position der Verkehrsampel 11 als auch der Abstand direkt aus den Bilddaten ermittelt bzw. gemessen werden.

Auch die Realisierung des erfindungsgemäßen Ampelphasenassistenten mittels einer Monokamera als Kamera 1 ist möglich. Hierzu wird mittels einer 3D-Szenenkonstruktion, welche im Stand der Technik bekannt ist, die Position der Verkehrsampel 11 bestimmt und die Länge L des Fahrweges W sowie der Abstand zur Verkehrsampel 11 geschätzt.

Ferner ist es auch möglich, dass zur Bestimmung der Länge L des Fahrweges W der Abstand zur Verkehrsampel durch Auswertung der Bilddaten der Monokamera 1 hinsichtlich der Winkeländerung der Verkehrsampel in den Bilddaten geschätzt wird.

### Bezugszeichen

- 1: Kamera, Monokamera, Stereokamera
- 1a: Sichtbereich der Kamera 1
- 2: Bildauswerteeinheit
- 3: Steuereinheit
- 4: Anzeigevorrichtung
- 5: ACC-System
- 6: Aktoren des ACC-Systems
- 7: Ampelphasenassistenzsystem

- 10: Fahrzeug
- 11: Ampel, Verkehrsampel
- 12: Fahrbahn
- 13: Haltelinie der Ampel 11

- E: Ende des Fahrweges W
- L: Länge des Fahrweges W
- W: Fahrweg des Fahrzeugs 10

- P1: Position des Fahrzeugs 10
- P2: Position des Fahrzeugs 10

## Patentansprüche

1. Verfahren zur Unterstützung eines mittels einer Kamera (1) die Ampelphasen einer Ampel (11) detektierenden Ampelphasenassistenten eines Fahrzeugs (10), wobei
- bei Erkennung einer Ampel (11) im Sichtfeld (1a) der Kamera (1) mittels einer Steuereinheit (3) die Länge (L) des die Ampel (11) im Sichtfeld (1a) der Kamera (1) haltenden Fahrweges (W) in Richtung der Ampel (11) bestimmt wird,
**dadurch gekennzeichnet, dass**
- der Fahrweg (W) derart bestimmt wird, dass die Ampel (11) noch im Sichtfeld (1a) der Kamera (11) ist, wenn das Fahrzeug (10) am Ende (E) des Fahrweges (W) stoppt, und
- ein die Länge (L) des Fahrweges (W) betreffendes Steuersignal ausgegeben wird.

2. Verfahren nach Anspruch 1, **dadurch gekennzeichnet, dass** das Steuersignal an eine Anzeigevorrichtung (4) des Fahrzeugs (10) ausgegeben wird, welche eine das Ende (E) des Fahrweges (W) anzeigende optische und/oder akustische Anzeige bewirkt.

3. Verfahren nach Anspruch 2, **dadurch gekennzeichnet, dass** die optische und/oder akustische Anzeige als Entfernungsangabe in einer Längenmaßeinheit für die Länge (L) des Fahrweges (W) erfolgt.

4. Verfahren nach einem der vorhergehenden Ansprüche,
**dadurch gekennzeichnet, dass** das Steuersignal an ein in das Bremssystem des Fahrzeugs (10) eingreifendes Assistenzsystem (5) ausgegeben wird, und das Assistenzsystem (5) dazu ausgebildet ist, das Ende (E) des Fahrweges (W) als Zielbremsung zu übernehmen und den Fahrer hinsichtlich dieser Zielbremsung unterstützt.

5. Verfahren nach Anspruch 1, **dadurch gekennzeichnet, dass** das Steuersignal (St) an eine automatische Fahrzeugsteuerung ausgegeben wird, die das Fahrzeug derart steuert, dass Fahrzeug am Ende (E) des Fahrweges (W) zum Stehen kommt.

6. Verfahren nach Anspruch 5, **dadurch gekennzeichnet, dass** der Fahrer über die automatische Fahrzeugsteuerung über eine optische und/oder akustische Anzeige informiert wird.

7. Verfahren nach einem der vorhergehenden Ansprüche,
**dadurch gekennzeichnet, dass** die Haltelinie (13) der Ampel (11) mittels der Kamera (1) erfasst und die Länge (L) des Fahrweges (W) so bestimmt wird, dass dessen Ende (E) eine vorgegebene Abstandsgrenze zur Haltelinie (13) nicht überschreitet .

8. Verfahren nach einem der vorhergehenden Ansprüche,
**dadurch gekennzeichnet, dass** zur Bestimmung der Länge (L) des Fahrweges (W) mittels einer 3D-Kamera (1) die geometrische Position und der Abstand der Ampel (11) von dem Fahrzeug (10) bestimmt wird.

9. Verfahren nach einem der Ansprüche 1 bis 7,
**dadurch gekennzeichnet, dass** zur Bestimmung der Länge des Fahrweges (W) der Abstand zur Ampel (11) durch Auswertung der Bilddaten einer Monokamera (1) mittels 3D-Szenenkonstruktion geschätzt wird.

10. Verfahren nach einem der Ansprüche 1 bis 7,
**dadurch gekennzeichnet, dass** zur Bestimmung der Länge (L) des Fahrweges (W) der Abstand zur Ampel (11) durch Auswertung der Bilddaten einer Monokamera (1) hinsichtlich der Winkeländerung der Ampel (11) in den Bilddaten geschätzt wird.

## Claims

1. A method for supporting a traffic-light-sequence assistant of a vehicle (10), said assistant detecting the traffic light sequences of a traffic light (11) by means of a camera (1),
wherein
- upon recognition of a traffic light (11) in the field of view (1a) of the camera (1), the length (L) of the driving path (W) keeping the traffic light (11) in the field of view (1a) of the camera (1) is determined in the direction of the traffic light (11) by means of a control unit (3), **characterized in that**
- the driving path (W) is determined such that the traffic light (11) is still in the field of view (1a) of the camera (11) when the vehicle (10) stops at the end (E) of the driving path (W), and
- a control signal relating to the length (L) of the driving path (W) is outputted.

2. The method of Claim 1, **characterized in that** the control signal is outputted to an indication device (4) of the vehicle (10), said indication device (4) causing the end (E) of the driving path (W) to be indicated visually and/or acoustically.

3. The method of Claim 2, **characterized in that** the visual and/or acoustic indication is in the form of an indication of distance in a measuring unit of length for the length (L) of the driving path (W).

4. The method of any one of the preceding claims, **characterized in that** the control signal is outputted to an assistance system (5) intervening in the braking system of the vehicle (10) and that the assistance system (5) is designed to take the end (E) of the driving path (W) as the point to be reached in a targeted braking maneuver and supports the driver with respect to said braking maneuver.

5. The method of Claim 1, **characterized in that** the control signal (St) is outputted to an automatic vehicle control system controlling the vehicle such that the vehicle comes to a stop at the end (E) of the driving path (W).

6. The method of Claim 5, **characterized in that** the driver is informed, by the automatic vehicle control system, about a visual and/or acoustic indication.

7. The method of any one of the preceding claims,
**characterized in that** the stop line (13) of the traffic light (11) is detected by means of the camera (1) and the length (L) of the driving path (W) is determined such that the end (E) thereof does not exceed a predetermined maximum distance to the stop line (13).

8. The method of any one of the preceding claims,
**characterized in that** for determining the length (L) of the driving path (W) by means of a 3D camera (1), the geometrical position and the distance between the traffic light (11) and the vehicle (10) are determined.

9. The method of any one of Claims 1 to 7,
**characterized in that** for determining the length of the driving path (W), the distance to the traffic light (11) is estimated by analyzing the image data of a mono camera (1) by means of 3D scene construction.

10. The method of any one of Claims 1 to 7,
**characterized in that** for determining the length (L) of the driving path (W), the distance to the traffic light (11) is estimated by analyzing the image data of a mono camera (1) with respect to the change in angle of the traffic light (11) in the image data.

## Revendications

1. Procédé d'aide à un assistant des séquences de feux de circulation d'un véhicule (10) détectant, au moyen d'une caméra (1), des séquences de feux de circulation d'un feu de circulation (11),
- lors de la détection d'un feu de circulation (11) dans un champ de vision (1a) de la caméra (1) au moyen d'une unité de commande (3), la longueur (L) d'une voie de circulation (W) maintenant le feu de circulation (11) dans le champ de vision (1a) de la caméra (1), dans la direction du feu de circulation (11), étant détectée, **caractérisé en ce que**
- la voie de circulation (W) est déterminée de telle sorte que le feu de circulation (11) est toujours dans le champ de vision (1a) de la caméra (11) lorsque le véhicule (10) s'arrête à l'extrémité (E) de la voie de circulation (W), et
- un signal de commande relatif à la longueur (L) de la voie de circulation (W) est émis.

2. Procédé selon la revendication 1, **caractérisé en ce que** le signal de commande est émis à un dispositif d'affichage (4) du véhicule (10), lequel provoque un affichage optique et / ou acoustique indiquant l'extrémité (E) de la voie (W).

3. Procédé selon la revendication 2, **caractérisé en ce que** l'affichage optique et / ou acoustique est effectué en tant qu'indication de distance dans une unité de mesure de longueur pour la longueur (L) de la voie de circulation (W).

4. Procédé selon l'une quelconque des revendications précédentes, **caractérisé en ce que** le signal de commande est émis à un système d'aide venant en prise avec le système de freinage (5) du véhicule (10) et que le système d'aide (5) est conçu pour prendre en charge l'extrémité (E) de la voie de circulation (W) en tant que freinage cible et pour aider un conducteur à la conduite en ce qui concerne ledit freinage cible.

5. Procédé selon la revendication 1, **caractérisé en ce que** le signal de commande (St) est émis à une commande de véhicule automatique, laquelle commande le véhicule de telle sorte que le véhicule est stoppé à l'extrémité (E) de la voie de circulation (W).

6. Procédé selon la revendication 5, **caractérisé en ce que** le conducteur est informé d'un affichage optique et / ou acoustique au moyen de la commande de véhicule automatique.

7. Procédé selon l'une quelconque des revendications précédentes, **caractérisé en ce qu'**une ligne d'arrêt (13) du feu de circulation (11) est détectée au moyen de la caméra (1) et la longueur (L) de la voie de circulation (W) est déterminée de telle sorte que son extrémité (E) ne dépasse pas une distance prédéterminée à la ligne d'arrêt (13).

8. Procédé selon l'une quelconque des revendications précédentes, **caractérisé en ce que**, pour déterminer la longueur (L) de la voie de circulation (W) au moyen d'une caméra tridimensionnelle (1), la position géométrique et la distance du feu de circulation (11) au véhicule (10) sont déterminées.

9. Procédé selon l'une quelconque des revendications 1 à 7, **caractérisé en ce que**, pour déterminer la longueur de la voie de circulation (W), la distance au feu de circulation (11) est estimée en évaluant les données d'image d'une caméra monoscopique (1) au moyen d'une reconstruction de scène tridimensionnelle.

10. Procédé selon l'une quelconque des revendications 1 à 7, **caractérisé en ce que**, pour déterminer la longueur (L) de la voie de circulation (W), la distance au feu de circulation (11) est estimée en évaluant les données d'image d'une caméra monoscopique (1) en fonction d'un changement d'angle du feu de circulation (11) dans les données d'image.
